# EUROPEAN PATENT APPLICATION

(11) **EP 4 220 815 A1**
(43) Date of publication of application: **02.08.2023**
(21) Application number: 23152944.7
(22) Date of filing: 23.01.2023
(51) Int. Cl.: H01M 10/42, H01M 50/284

(54) **BATTERY PACK CONNECTOR**

(30) Priority: 27.01.2022 KR 20220012590
(71) Applicant: Samsung SDI Co., Ltd., Yongin-si, Gyeonggi-do 17084 (KR)
(72) Inventor: PARK, Seokryun, 17084 Yongin-si (KR)
(74) Representative: Walaski, Jan Filip

(57) **Abstract**

A connector of a battery pack includes first pads arranged at both sides of one end of the connector, and second pads arranged at both sides of another end of the connector, wherein the first pads are in contact with each of first and second open portions, and the second pads are in contact with each of third and fourth open portions.

## Description

### CROSS-REFERENCE TO RELATED APPLICATION

This application is based on Korean Patent Application No. 10-2022-0012590, filed on January 27, 2022, in the Korean Intellectual Property Office.

### BACKGROUND

### 1. Field

One or more embodiments relate to a connector of a battery pack.

### 2. Description of the Related Art

Typically, unlike primary batteries, secondary batteries are chargeable and dischargeable batteries. Secondary batteries may be used as an energy source for mobile devices, electric vehicles, hybrid vehicles, electric bicycles, uninterruptible power supply units, and the like, and may be used in the form of a single battery, or a module or pack of a multiple of batteries connected in one unit, depending on the types of external devices to which the secondary batteries are employed.

A battery pack may include a protection circuit module (PCM) to protect secondary batteries from problems, such as a short-circuit, an open-circuit, an overcurrent, an overvoltage, etc., which may be generated during charging/discharging.

Such a protection circuit module includes a flexible printed circuit board (FPCB) coupled to a battery module, and a connector is mounted on the FPCB.

The connector may be detached by a physical force during assembling and disassembling with respect to a connector of a counterpart battery module, and as the thickness and plating of a FPCB are relatively thin, there is a high risk of breakage of the connector mounted on the FPCB.

### SUMMARY

Provided is a connector of a battery pack, in which separation and damage to the connector is prevented by improving rigidity of the connector.

However, such an objective is an example, and the disclosure is not limited thereto.

Additional aspects will be set forth in part in the description which follows and, in part, will be apparent from the description, or may be learned by practice of the presented embodiments of the disclosure.

According to one or more embodiments, a connector of a battery pack includes first pads arranged at both sides of one end of the connector, and second pads arranged at both sides of another end of the connector, wherein the first pads are in contact with each of first and second open portions, and the second pads are in contact with each of third and fourth open portions.

The connector may further include third pads arranged inside the first pads that are symmetrically arranged at both sides, wherein the third pads are each spaced apart from a fifth open portion by a first distance.

Each of the third pads may be smaller than each of the first pads, and the third pads may be arranged to be engaged with one of outer lines of the first pads.

The third pads may each be spaced apart from each of the fifth open portion and a seventh open portion.

The connector may further include fourth pads arranged inside the second pads that are symmetrically arranged at both sides, wherein the fourth pads are each spaced apart from a sixth open portion by a second distance.

Each of the fourth pads may be smaller than each of the second pads, and the fourth pads may be arranged to be engaged with one of outer lines of the second pads.

The fourth pads may each be spaced apart from each of a fifth open portion and the sixth open portion.

The first pads may each be formed in a rectangular shape to form first and second boundary lines respectively with the first and second open portions.

The second pads may each be formed in a rectangular shape to form third and fourth boundary lines respectively with the third and fourth open portions.

Other aspects, features, and advantages than those described above will become apparent from the following drawings, claims, and detailed description of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view of a battery pack according to an embodiment;
FIG. 2 is an exploded perspective view of a battery pack according to an embodiment;
FIG. 3 is a plan view of a connector according to an embodiment; and
FIG. 4 is a view showing the arrangement of pads according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Embodiments are provided to further completely explain the disclosure to one of ordinary skill in the art to which the disclosure pertains. However, the disclosure is not limited thereto and it will be understood that various changes in form and details may be made therein without departing from the spirit and scope of the following claims. In the description of the disclosure, even when illustrated in another embodiment, like reference numerals in the drawings denote like elements.

Hereinafter, exemplary embodiments will be described in detail with reference to the accompanying drawings, and in the description with reference to the drawings, the same or corresponding constituents are indicated by the same reference numerals and redundant descriptions thereof are omitted.

In the following embodiment, it will be understood that although the terms "first," "second," etc. may be used herein to describe various components, these components should not be limited by these terms. These terms are only used to distinguish one component from another.

In the following embodiment, as used herein, the singular forms are intended to include the plural forms as well, unless the context clearly indicates otherwise.

In the following embodiment, it will be further understood that the terms "comprises" and/or "comprising" used herein specify the presence of stated features or components, but do not preclude the presence or addition of one or more other features or components.

Sizes of components in the drawings may be exaggerated for convenience of explanation. For example, since sizes and thicknesses of components in the drawings are arbitrarily illustrated for convenience of explanation, the following embodiments are not limited thereto.

In the following embodiment, the x-axis, the y-axis and the z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

When a certain embodiment may be implemented differently, a specific process order may be performed differently from the described order. For example, two consecutively described processes may be performed substantially at the same time or performed in an order opposite to the described order.

These terms are used only for the purpose of distinguishing one constituent element from another constituent element. In the specification, terms such as "include" or "comprise" may be construed to denote a certain characteristic, number, step, operation, constituent element, or a combination thereof, but may not be construed to exclude the existence of or a possibility of addition of one or more other characteristics, numbers, steps, operations, constituent elements, or combinations thereof.

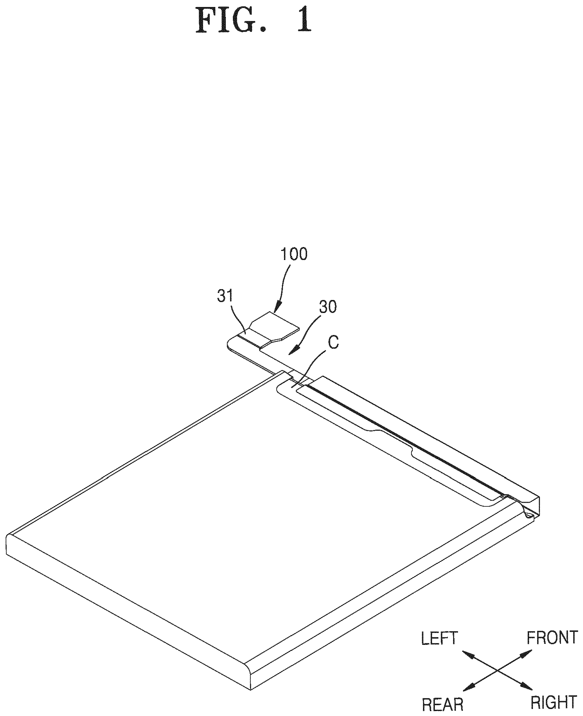

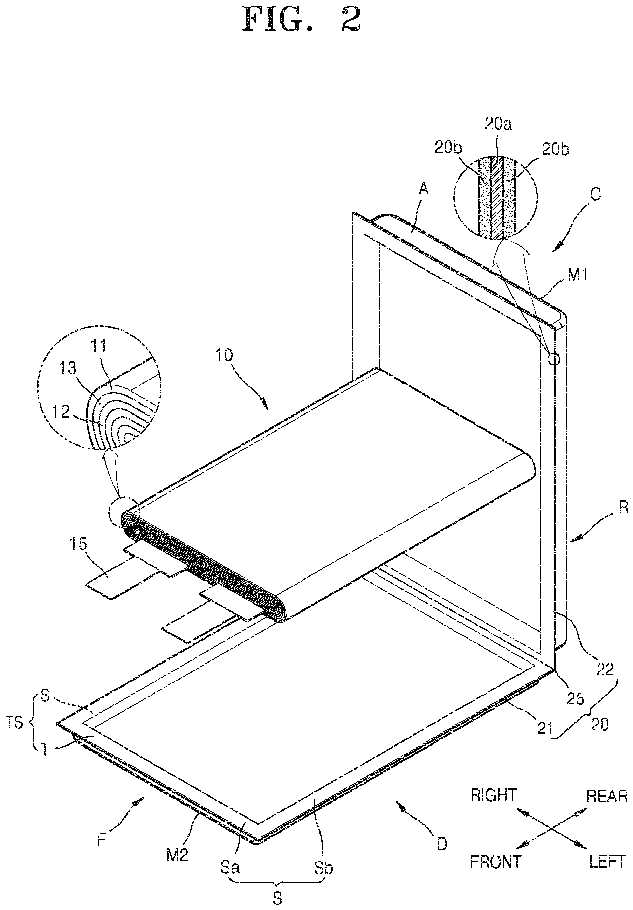

Hereinafter, a connector of a battery pack according to an embodiment is described below with reference to FIGS. 1 and 2.

FIG. 1 is a perspective view of a battery pack according to an embodiment. FIG. 2 is an exploded perspective view of a battery pack according to an embodiment.

Referring to FIGS. 1 and 2, a connector of a battery pack according to an embodiment includes a battery cell C. The battery cell C may include an accommodation portion A for accommodating an electrode assembly 10, and a sealing portion TS extending along the edge of the accommodation portion A to seal the accommodation portion A. The electrode assembly 10 may be formed in the form of a roll by winding first and second electrode plates 11 and 12 arranged to face each other with a separator 13 therebetween or in the form of a stack by stacking a plurality of first and second electrode plates 11 and 12 with the separator 13 therebetween.

An electrode tab 15 forming a charging/discharging path may be connected to the electrode assembly 10. The electrode tab 15 may include to two electrode tabs having different polarities and electrically connected to the electrode assembly 10, and the electrode tab 15 connected to the electrode assembly 10 in the accommodation portion A may be led out to the outside through a front surface F of the accommodation portion A.

The accommodation portion A that accommodates the electrode assembly 10 may be formed in an approximately rectangular parallelepiped shape. In detail, the accommodation portion A may include the front surface F through which the electrode tab 15 is led out, a rear surface R opposite to the front surface F, a pair of main surfaces M1 and M2 connecting the front surface F to the rear surface R and occupying a relatively large area, and a pair of side surfaces D connecting the front surface F to the rear surface R and occupying a relatively small area.

The main surfaces M1 and M2 may occupy the largest area among the surfaces of the accommodation portion A, by occupying an area larger than each of the front surface F, the rear surface R, and the side surfaces D. The front surface F, the rear surface R, and the pair of side surfaces D may be connected to the main surfaces M1 and M2 at different edges along the main surfaces M1 and M2 of the accommodation portion A. In an embodiment, the main surfaces M1 and M2 and the side surfaces D may each be formed in a pair at positions facing each other. For example, the main surfaces M1 and M2 may include first and second main surfaces M1 and M2 facing each other.

The battery cell C may further include the sealing portion TS formed along the edge of the accommodation portion A to seal the accommodation portion A. The accommodation portion A that accommodates the electrode assembly 10 and the sealing portion TS that seals the accommodation portion A may be formed from an exterior member 20 that is continuously formed to surround the electrode assembly 10. In other words, the exterior member 20 may form the accommodation portion A that accommodates the electrode assembly 10 while surrounding the electrode assembly 10, and an extra portion of the exterior member 20 after forming the accommodation portion A may form the sealing portion TS that seals the accommodation portion A.

The exterior member 20 may be formed as a flexible exterior member such as a pouch, and in detail, may include a metal layer 20a, such as an aluminum thin plate, and an insulating layer 20b, such as a resin coating layer, formed on both sides of the metal layer 20a. In this state, the metal layer 20a may be exposed to the outside through a cross-section where the exterior member 20 ends, and as described below, the metal layer 20a may be exposed through the edge of the sealing portion TS that is obtained as first and second exterior members 21 and 22 are combined to face each other with the electrode assembly 10 therebetween.

In an embodiment, the exterior member 20 may include the first and second exterior members 21 and 22 that are combined to face each other with the electrode assembly 10 therebetween. While the electrode assembly 10 is provided between first and second exterior members 21 and 22, the first and second exterior members 21 and 22 are folded to overlap each other through a folding portion 25 that connect the first and second exterior members 21 and 22 to each other, and then portions contacting each other along edge areas of the first and second exterior members 21 and 22 are combined to each other by heat fusion and the like. Then, the inner areas of the first and second exterior members 21 and 22 facing each other with the electrode assembly 10 therebetween may be formed as the accommodation portion A, and the edge areas of the first and second exterior members 21 and 22 combined to each other may be formed as the sealing portion TS.

The sealing portion TS may be continuously formed along the edge areas of the first and second exterior members 21 and 22, in detail continuously along the side portions of the first and second exterior members 21 and 22, except the folding portion 25. In detail, the sealing portion TS may include a terrace portion T extending in a direction toward the front surface F of the accommodation portion A, and a side sealing portion S extending in a direction toward the side surfaces D of the accommodation portion A. In this state, the electrode tab 15 connected to the electrode assembly 10 in the accommodation portion A may be led out to the outside of the accommodation portion A through the terrace portion T extending in a direction toward the front surface F of the accommodation portion A. A protection circuit module 30 may be placed on the terrace portion T, and the electrode tab 15 led out through the terrace portion T may be bent to be connected to the protection circuit module 30 placed on the terrace portion T.

The side sealing portion S may include a main body Sb of the side sealing portion S at a position corresponding to the accommodation portion A, and a front end portion Sa of the side sealing portion S extending from the main body Sb of the side sealing portion S toward a position deviated from the accommodation portion A. The side sealing portion S may be folded toward the accommodation portion A to reduce the total area occupied by the battery cell C, and as shown below, the side sealing portion S may be folded toward the accommodation portion A through primary folding and secondary folding. In other words, in the primary folding, the main body Sb of the side sealing portion S at the position corresponding to the accommodation portion A, and the front end portion Sa of the side sealing portion S at the position deviated from the accommodation portion A, are folded upward together, and after the primary folding, the second folding may be performed, in which the front end portion Sa of the side sealing portion S deviated from the accommodation portion A is folded to be concavely led in toward a corner where the front surface F of the accommodation portion A and the terrace portion T contact each other. Through the primary folding and the secondary folding, the main body Sb of the side sealing portion S may be folded upward toward the side surfaces D of the accommodation portion A and arranged on the side surfaces D of the accommodation portion A to be adjacent thereto, and among the side sealing portion S, the front end portion Sa of the side sealing portion S at a position deviated from the accommodation portion A may form a dog ear in the form of being concavely led in toward the corner formed by the front surface F of the accommodation portion A and the terrace portion T.

Through the edge of the side sealing portion S, the metal layer 20a may be exposed through a cross-section where the exterior member 20 forming the side sealing portion S ends. As the main body Sb of the side sealing portion S is folded on the side surfaces D of the accommodation portion A, the metal layer 20a that is exposed through the edge of the main body Sb of the side sealing portion S may not protrude from the side surfaces D of the accommodation portion A. As the front end portion Sa of the side sealing portion S is folded to be concavely led in toward the corner formed by the front surface F of the accommodation portion A and the terrace portion T, the metal layer exposed through the edge of the front end portion Sa of the side sealing portion S may not protrude from the front surface F of the accommodation portion A. In other words, as the main body Sb of the side sealing portion S is folded on the side surfaces D of the accommodation portion A, and the front end portion Sa of the side sealing portion S is folded toward the corner where the terrace portion T and the front surface F of the accommodation portion A contact each other, the side sealing portion S may not protrude from the side surfaces D of the accommodation portion A and the front surface F of the accommodation portion A, and may be folded in a shape following the appearance of the accommodation portion A.

In an embodiment, the appearance of the battery cell C may generally follow the appearance of the accommodation portion A, and the outer surface of the accommodation portion A, that is, the front surface F, the rear surface R, the main surfaces M1 and M2, and the side surfaces D of the accommodation portion A may mean substantially the outer surfaces of the battery cell C, that is, a front surface, a rear surface, a main surface, and side surfaces of the battery cell C. For example, the battery cell C may further include the sealing portion TS sealing the accommodation portion A, with the accommodation portion A for accommodating the electrode assembly 10. In this state, to reduce the area occupied by the battery cell C, the sealing portion TS, that is, at least the side sealing portion S, may be folded toward the side surfaces D of the accommodation portion A and the front surface F, the appearance of the battery cell C may generally follow the appearance of the accommodation portion A. Accordingly, the front surface F, the rear surface R, the main surfaces M1 and M2, and the side surfaces D of the accommodation portion A may mean substantially the front surface, the rear surface, the main surface, and the side surfaces of the battery cell C. For example, the terrace portion T may be formed at a front position of the battery cell C, and the terrace portion T is formed generally in the form of a plate shape rather than a surface shape so that the protection circuit module 30 is placed thereon. When the appearance of the battery cell C is an approximately rectangular parallelepiped shape, the front surface of the battery cell C may mean that the front surface F of the accommodation portion A.

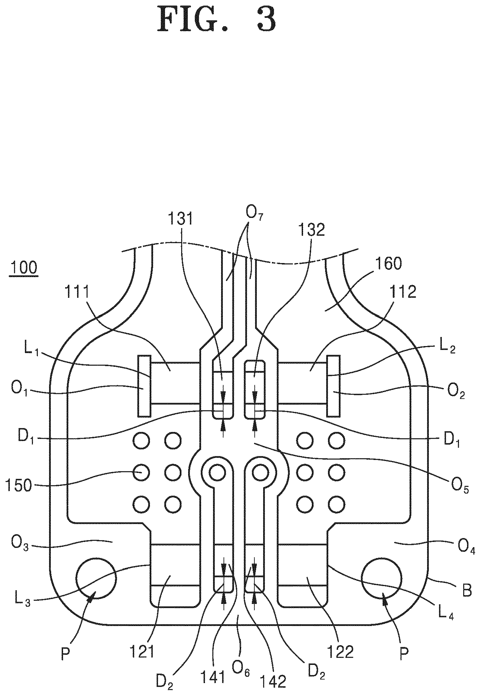

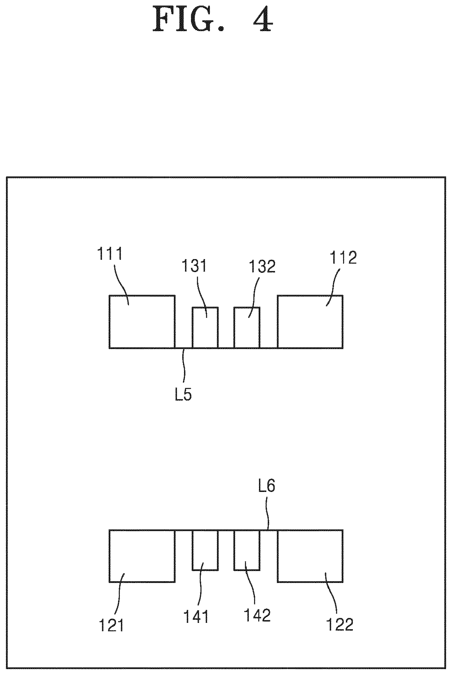

A connector structure according to an embodiment is described below with reference to FIGS. 3 and 4. Any content that is not disclosed in FIGS. 3 and 4 may be referred to the contents described above.

A connector 100 of a battery pack according to an embodiment may be arranged, as illustrated in FIG. 1, on a flexible circuit board 31 arranged in the protection circuit module 30. The connector 100 may be connected to the connector 100 of another battery pack.

In this state, the connector 100 may include first pads 111 and 112 arranged at both sides of one end of the connector 100 and second pads 121 and 122 arranged at both sides of the other end of the connector 100. The first pads 111 and 112 are respectively in contact with first and second open portions O1 and O2, and the second pads 121 and 122 are respectively in contact with third and fourth open portions O3 and O4. Open portions mean a space in the polyimide layer on which the plating layer is disposed. In the open portions O3 and O4, pads P are respectively disposed. The outer lines of O3 and O4 form a boundary B surface. Pads are in contact with polyimide layer. Pads are for electrical connection. Pads may support the polyimide layer constituting the connector.

In addition to the pad portion and the open portion, the connector 100 may include a plating portion 160 formed in a plating pattern and a terminal portion 150 for power connection.

As in the present embodiment, the first and second open portions O1 and O2 in a PI (polyimide) film open structure are arranged to contact the first pads 111 and 112 arranged at both sides, and the first pads 111 and 112 may be formed in contact with the first and second open portions O1 and O2, while maintaining a rectangular shape. In detail, the first pads 111 and 112 may each be formed in a rectangular shape to form the first and second boundary lines L1 and L2 respectively with the first and second open portions O1 and O2. The overall rigidity of the connector 100 may be improved through the shape and arrangement structure of the first pads 111 and 112. In other words, the shear strength and tensile strength of the connector 100 may be improved.

Also, the third and fourth open portions O3 and O4 arranged at both sides may be formed in contact with the second pads 121 and 122, respectively. In detail, the second pads 121 and 122 may be formed in a rectangular shape to form third and fourth boundary lines L3 and L4 respectively with the third and fourth open portions O3 and O4. The overall rigidity of the connector 100 may be improved through the shape and arrangement structure of the first pads 111 and 112. In other words, the shear strength and tensile strength of the connector 100 may be improved.

According to the present embodiment, the connector 100 may include third pads 131 and 132 arranged inside the first pads 111 and 112 that are symmetrically arranged at both sides. The third pads 131 and 132 may be formed in a rectangular shape smaller than the first pads 111 and 112. In this state, the third pads 131 and 132 may be arranged in parallel to be engaged with one of outer line L5 of the first pads 111 and 112. Accordingly, the first pads 111 and 112 may support the outside of the connector 100, and the third pads 131 and 132 may support the inside of the connector 100.

The third pads 131 and 132 may each be spaced apart from a fifth open portion O5 by a first distance D1. In detail, the third pads 131 and 132 may each be spaced apart from the fifth open portion O5 and a seventh open portion O7, respectively. As such, the overall rigidity of the connector 100 may be improved though the structure in which the third pads 131 and 132 are each spaced apart from the fifth open portion O5 and the seventh open portion O7 to both sides. In other words, the shear strength and tensile strength of the connector 100 may be improved.

According to the present embodiment, the connector 100 may include fourth pads 141 and 142 arranged inside the second pads 121 and 122 that are symmetrically arranged at both sides. The fourth pads 141 and 142 may be formed in a rectangular shape smaller than the second pads 121 and 122. In this state, the fourth pads 141 and 142 may be arranged in parallel to be engaged with one outer line among the outer line L6 of the second pads 121 and 122. Accordingly, the second pads 121 and 122 may support the outside of the connector 100, and the fourth pads 141 and 142 may support the inside of the connector 100.

The fourth pads 141 and 142 may each be spaced apart from a sixth open portion O6 by a second distance D2. In detail, the fourth pads 141 and 142 may each be spaced apart from the fifth open portion O5 and the sixth open portion O6. As such, the overall rigidity of the connector 100 may be improved through the structure in which the fourth pads 141 and 142 are each spaced apart from the fifth open portion O5 and the sixth open portion O6 to both sides. In other words, the shear strength and tensile strength of the connector 100 may be improved.

Referring to FIG. 4, the first, second, third, and fourth pads may be all in a rectangular shape, and spaced apart from each other. In this state, the first and second pads may be arranged symmetrically to each other in one direction as a length direction, and the third and fourth pads may be arranged symmetrically to each other in the other direction perpendicular to the one direction as a length direction.

The shear strength and tensile strength of the connector 100 according to the present embodiment may be improved through the above pad arrangement structure of the connector 100. Also, a process capability index (CPK) of the connector 100 with respect to the same area may be improved. Also, due to the improvement of rigidity of the connector 100, during attachment and detachment, the breakage and damage to the connector 100 may be reduced.

As such, although the disclosure is described based on the embodiment illustrated in the drawings, this is an example.

The particular implementations shown and described herein are illustrative examples of the disclosure and are not intended to otherwise limit the scope of the disclosure in any way. For the sake of brevity, conventional electronics, control systems, software development and other functional aspects of the systems may not be described in detail.

Furthermore, the connecting lines, or connectors shown in the various figures presented are intended to represent functional relationships and/or physical or logical couplings between the various elements. It should be noted that many alternative or additional functional relationships, physical connections or logical connections may be present in a practical device. Moreover, no item or component is essential to the practice of the disclosure unless the element is specifically described as "essential" or "critical."

The use of the terms "a" and "an" and "the" and similar referents in the context of describing the disclosure are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein.

Furthermore, the steps of all methods described herein can be performed in any suitable order unless otherwise indicated herein or otherwise clearly contradicted by context.

The disclosure is not limited to the described order of the steps. The use of any and all examples, or language (e.g., "such as") provided herein, is intended merely to better illuminate the disclosure and does not pose a limitation on the scope of the disclosure unless otherwise claimed.

Furthermore, numerous modifications and adaptations will be readily apparent to one of ordinary skill in the art without departing from the spirit and scope of the disclosure.

According to the connector of a battery pack according to an embodiment, the shear strength and tensile strength of the connector may be improved.

Furthermore, according to the connector of a battery pack according to an embodiment, a possibility of breakage or damage to the connector during attachment and detachment may be reduced through the pad structure of the connector.

The effects achieved by the terminal apparatus and the method of identifying a malicious access point using the terminal apparatus according to an embodiment are not limited to the contents disclosed herein, and other various effects that are not mentioned herein would be clearly understood by a person skilled in the art from the description of the present invention.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from scope of the invention as defined by the following claims.

## Claims

1. A connector of a battery pack, the connector comprising:
first pads arranged at both sides of one end of the connector; and
second pads arranged at both sides of another end of the connector,
wherein the first pads are in contact with each of first and second open portions in the connector, and
the second pads are in contact with each of third and fourth open portions in the connector.

2. The connector of claim 1, further comprising third pads arranged inside the first pads that are symmetrically arranged at both sides,
wherein the third pads are each spaced apart from a fifth open portion in the connector by a first distance.

3. The connector of claim 2, wherein each of the third pads is smaller than each of the first pads, and
the third pads are arranged to be engaged with one of outer lines of the first pads.

4. The connector of claim 2, wherein the third pads are each spaced apart from each of the fifth open portion and a seventh open portion in the connector.

5. The connector of claim 1, further comprising fourth pads arranged inside the second pads that are symmetrically arranged at both sides,
wherein the fourth pads are each spaced apart from a sixth open portion in the connector by a second distance.

6. The connector of claim 5, wherein each of the fourth pads is smaller than each of the second pads, and
the fourth pads are arranged to be engaged with one of the outer lines of the second pads.

7. The connector of claim 5, wherein the fourth pads are each spaced apart from each of a fifth open portion in the connector and the sixth open portion.

8. The connector of claim 1, wherein the first pads are each formed in a rectangular shape to form first and second boundary lines respectively with the first and second open portions.

9. The connector of claim 1, wherein the second pads are each formed in a rectangular shape to form third and fourth boundary lines respectively with the third and fourth open portions.
